# FASCICULE DE BREVET EUROPEEN

(11) **EP 2 585 320 B1**
(45) Date de publication et mention de la délivrance du brevet: **07.01.2015**
(21) Numéro de dépôt: 11739111.0
(22) Date de dépôt: 22.06.2011
(51) Int. Cl.: B60G 17/005, B60G 21/00, B62D 9/02, B62K 5/00

(54) **DISPOSITIF DE CONTRÔLE DE L'INCLINAISON D'UN CADRE MONTÉ SUR UN TRAIN DE ROULEMENT INCLINABLE**
VORRICHTUNG ZUR STEUERUNG DER NEIGUNG EINES AUF EINEM NEIGBAREN FAHRGESTELL MONTIERTEN RAHMENS
DEVICE FOR CONTROLLING THE INCLINE OF A FRAME MOUNTED ON AN INCLINABLE RUNNING GEAR

(30) Priorité: 23.06.2010 FR 1002630
(43) Date de publication de la demande: 01.05.2013
(73) Titulaire: VELEANCE, 13590 Meyreuil (FR); SOCIETE DE RECHERCHES ET DEVELOPPEMENTS AUTOMOBILE, 94270 Le Kremlin Bicêtre (FR)
(72) Inventeur: GAILLARD-GROLEAS, Jérôme, F-13090 Aix-En-Provence (FR); SCHAEFFER, Gilles, F-94270 Le Kremlin Bicetre (FR)
(74) Mandataire: Renaud-Goud, Thierry
(86) Numéro de dépôt international: PCT/FR2011/000355
(87) Numéro de publication internationale: WO 2011/161334

(56) Documents cités:
- FR-A1- 2 550 507
- FR-A1- 2 616 405
- FR-A1- 2 646 379
- FR-A1- 2 933 950
- US-A- 4 484 648

## Description

La présente invention concerne un dispositif de contrôle de l'inclinaison d'un cadre monté sur un train de roulement inclinable.

Le domaine de l'invention est donc celui des véhicules, tricycles ou quadricycles, qui comportent un cadre inclinable. Dans le cas d'un tricycle, ce cadre supporte une roue à une de ses extrémités et il est articulé sur un train de roulement à son autre extrémité. Dans le cas d'un quadricycle, le cadre est articulé entre un train de roulement avant et un train de roulement arrière. Chaque train de roulement comporte donc deux roues et la présente invention concerne les trains dont les deux roues sont indépendantes et sont également inclinables.

Ainsi le document FR 2 616 405 enseigne un tricycle motorisé comportant un train arrière dont les roues sont indépendantes et inclinables. Ces roues sont chacune montée sur un bras oscillant articulé d'autre part sur un arbre transversal solidaire du cadre. Un balancier est relié en son centre au cadre par un amortisseur et à ses extrémités aux deux bras oscillants par des bielles.

Il apparaît que ce tricycle n'apporte pas la sécurité requise à vitesse élevée en courbes. En effet, le cadre qui est soumis à la force centrifuge essentiellement due à la masse du conducteur tend à s'incliner vers l'extérieur du virage.

Une telle position du cadre rend la conduite délicate, voire dangereuse. De plus, le conducteur peut être amené malgré lui à commander l'inclinaison du cadre dans le mauvais sens.

Le document WO 2006/130007 décrit un tricycle dont l'inclinaison est motorisée. La commande de cette motorisation prend en compte un capteur de vitesse, un capteur de direction et un capteur d'accélération latérale. Elle est prévue pour privilégier l'accélération latérale à l'arrêt ou à basse vitesse alors qu'à vitesse élevée, c'est le capteur de direction qui prédomine. Là encore l'inclinaison du cadre n'est pas réellement contrôlée à vitesse élevée.

La motorisation de l'inclinaison contrarie la conduite naturelle car elle impose cette inclinaison plutôt que de laisser agir les phénomènes physiques que sont la pesanteur et la force centrifuge. De plus, elle consomme de l'énergie pour fixer l'inclinaison du cadre, ce qui est très pénalisant dans le cas des véhicules écologiques à très basse consommation et semble donc pratiquement inapplicable dans le cas d'un véhicule non motorisé à propulsion humaine.

En outre, le système complet de commande de l'inclinaison présente une certaine complexité, ce qui est un handicap certain pour le coût du véhicule.

Ainsi, le document FR 2 825 672 rapporte une solution pour limiter le risque d'inclinaison à contre-sens. Le tricycle comporte un essieu disposé à l'arrière, un cadre qui supporte la roue avant directrice et une articulation pour raccorder le cadre à l'essieu. Mais ici, l'articulation est passive, le cadre est libre de s'incliner selon la résultante des forces qui lui sont appliquées. Ce tricycle comporte de plus un moyen de blocage de l'articulation qui est commandé par un organe pendulaire. Le but recherché est ici d'éviter un basculement du cadre à l'arrêt ou à vitesse très basse et le mécanisme est donc désactivé dès que la vitesse excède un seuil prédéterminé. L'organe pendulaire présente une structure mécanique complexe et peut amener un blocage brutal du cadre.

On connaît encore le document FR 2 933 950 qui apporte une solution satisfaisante quant au contrôle de l'inclinaison. Ici, un dispositif comporte, un châssis, un cadre inclinable, une articulation passive permettant l'inclinaison du cadre relativement au châssis et un moyen de blocage ce cette articulation, à savoir un vérin. Le contrôle est effectué au moyen d'un accéléromètre disposé sur le cadre inclinable et d'un circuit de commande qui bloque le vérin lorsque l'accélération devient trop importante.

En adaptant l'enseignement de ce document à un train roulant à bras oscillants, cela conduit à disposer le moyen de blocage entre le cadre et le balancier, comme dans le document FR 2 550 507. Cet agencement n'est pas favorable au découplage entre l'amortisseur et le vérin. Ce même document montre un dispositif monté sur un train roulant tel que décrit par le préambule de la revendication 1.

En inclinaison, il convient de ne pas entraver la libre course de l'amortisseur pour éviter une quelconque entrave à cette inclinaison. Or, le vérin a une longueur qui est fonction de l'inclinaison : cette variation de longueur contrarie le libre déplacement de l'amortisseur.

En pompage, il est souhaitable que la longueur du vérin ne varie pas non plus pour éviter de contraindre l'amortisseur. Or, là encore la longueur du vérin est fonction de celle de l'amortisseur.

La présente invention a ainsi pour objet un dispositif de contrôle de l'inclinaison d'un cadre monté sur un train de roulement inclinable qui donne satisfaction quant au découplage entre l'amortisseur et le moyen de blocage.

Selon l'invention, le dispositif est monté sur un train roulant qui comporte :
- un balancier relié d'une part à un cadre inclinable au moyen d'un amortisseur et d'autre part à deux bras oscillants par l'intermédiaire de deux bielles,
- un moyen de blocage dont un premier point d'ancrage figure sur le balancier ;
de plus, ce dispositif comprend un moyen de découplage constitué d'un levier horizontal et d'un levier vertical reliés par un point de liaison autour duquel ils sont à même de pivoter, les extrémités libres de ces leviers étant respectivement reliées au cadre et au balancier, le second point d'ancrage du moyen de blocage figurant sur le moyen de découplage.

On déporte ainsi le second point d'ancrage à l'extérieur du cadre pour minimiser les variations de longueur du moyen de blocage. On minimise consécutivement le couplage entre l'amortisseur et ce moyen de blocage.

Avantageusement, le second point d'ancrage coïncide avec le point de liaison.

De préférence, l'amortisseur ayant sa première extrémité liée au cadre et sa seconde extrémité liée au balancier, le levier horizontal est raccordé au cadre au niveau de cette première extrémité.

Avantageusement, le premier point d'ancrage est positionné au niveau de la seconde extrémité de cet amortisseur.

Suivant un mode de réalisation privilégié, le moyen de blocage est un vérin à double effet.

A titre d'exemple, les deux chambres du vérin à double effet sont reliées par deux canalisations unidirectionnelles de sens opposés comportant chacune une vanne.

Par ailleurs, les canalisations unidirectionnelles comportent chacune un clapet anti-retour.

De manière avantageuse, le dispositif est agencé pour, lorsque l'accélération transverse excède un seuil prédéterminé, fermer celle des vannes qui autorise un déplacement du vérin dans le sens de cette accélération.

D'autre part, le dispositif est agencé pour déterminer l'ouverture de la vanne en fonction du module de l'accélération transverse.

Ainsi, le dispositif disposant de plus de la vitesse longitudinale de ce dispositif, il est agencé pour déterminer l'ouverture de la vanne en fonction du module de la vitesse longitudinale.

L'invention vise également un véhicule, notamment un quadricycle, équipé du dispositif exposé ci-dessus.

La présente invention apparaîtra maintenant avec plus de détails dans le cadre de la description qui suit d'exemples de réalisation donnés à titre illustratif en se référant aux figures annexées qui représentent :
- la figure 1, une vue arrière schématique d'un train roulant à deux roues indépendantes monté sur un cadre inclinable en position verticale,
- la figure 2, une vue arrière schématique de ce même train roulant, cadre incliné sur la droite,
- la figure 3, une vue arrière schématique de ce même train roulant, cadre incliné sur la gauche, et
- la figure 4, un schéma d'un moyen de blocage.

Les éléments présents dans plusieurs figures sont affectés d'une seule et même référence.

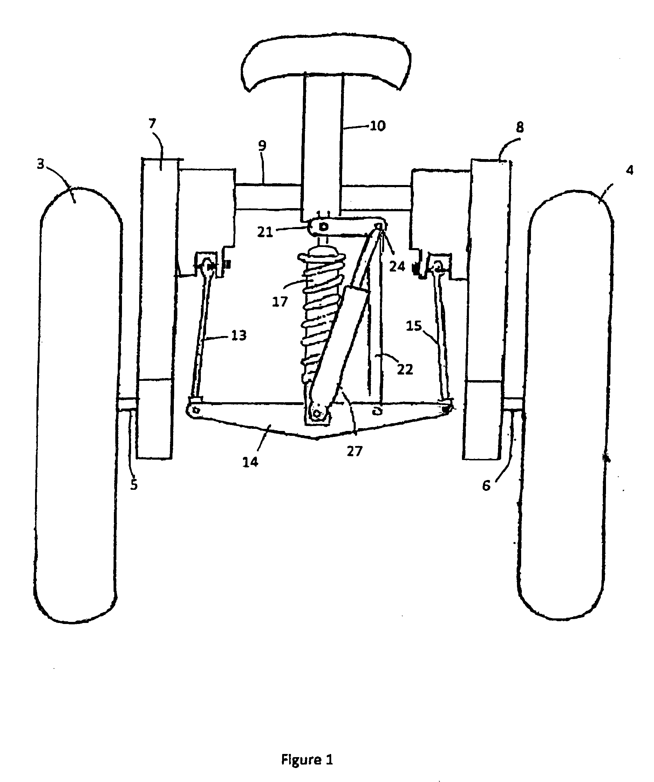

En référence à la figure 1, l'invention est présentée sur le train arrière à roues indépendantes d'un tricycle ou d'un quadricycle.

Ce train roulant comporte donc une roue gauche 3 et une roue droite 4 montées sur un arbre transversal gauche 5 respectivement droit 6 lui-même fixé à l'extrémité inférieure d'un bras oscillant gauche 7 respectivement droit 8. Ces bras latéraux, autrement connus sous le nom de bras tirés, sont assujettis à leurs extrémités supérieures à un arbre longitudinal 9 qui traverse le cadre inclinable 10.

Une bielle gauche 13 voit son extrémité supérieure articulée à la partie supérieure du bras gauche 7 et son extrémité inférieure articulée à l'extrémité gauche d'un balancier 14 détaillé plus loin.

De même une bielle droite 15 est articulée entre l'extrémité supérieure du bras droit 8 et l'extrémité droite du balancier 14.

Le balancier 14 est un élément rigide disposé transversalement entre les roues 3, 4 du véhicule 10. Il est flottant par rapport au cadre 10, d'où son nom. En effet, lorsque le cadre et les roues s'inclinent, celui-ci reste horizontal, sensiblement parallèle à la route.

Ce balancier 14 est d'autre part relié au cadre 10 sensiblement en son centre. Cette liaison peut être rigide. Cependant, de préférence, c'est un amortisseur 17 qui est fixé entre le cadre 10 et le balancier 14.

Selon l'invention, un moyen de découplage est prévu pour supporter le moyen de blocage.

Ce moyen de découplage comporte un levier horizontal 21 et un levier vertical 22 qui sont solidarisés sur un point de liaison 24 autour duquel ils sont susceptibles de pivoter.

L'extrémité libre du levier horizontal 21 est fixée sur le cadre 10, avantageusement au niveau de l'extrémité supérieure de l'amortisseur 17. L'extrémité libre du levier vertical 22 est fixée au balancier 14 entre son centre et son extrémité (droite sur la figure).

On définit ainsi un parallélogramme déformable dont les deux grands côtés sont l'amortisseur 17 ainsi que le levier vertical 22 et les deux petits côtés, le levier horizontal 21 et la section du balancier 14 qui lui fait face.

La fonction de ce moyen de découplage est de déporter un point d'ancrage du moyen de blocage à l'extérieur du cadre.

La fonction du moyen de blocage est de rigidifier la structure du moyen de découplage pour immobiliser le cadre dans une inclinaison donnée.

Il s'agit en fait d'un élément dont la longueur varie mais qu'on peut bloquer dans une position déterminée. Ce moyen de blocage prend ici la forme d'un vérin à double effet dont les extrémités sont fixées à un premier point d'ancrage figurant sur le balancier et à un second point d'ancrage figurant sur le moyen de découplage.

Suivant un mode de réalisation privilégié, le second point d'ancrage coïncide avec le point de liaison 24 des deux leviers 21, 22 et le premier point d'ancrage coïncide avec le point de fixation de l'extrémité inférieure de l'amortisseur 17.

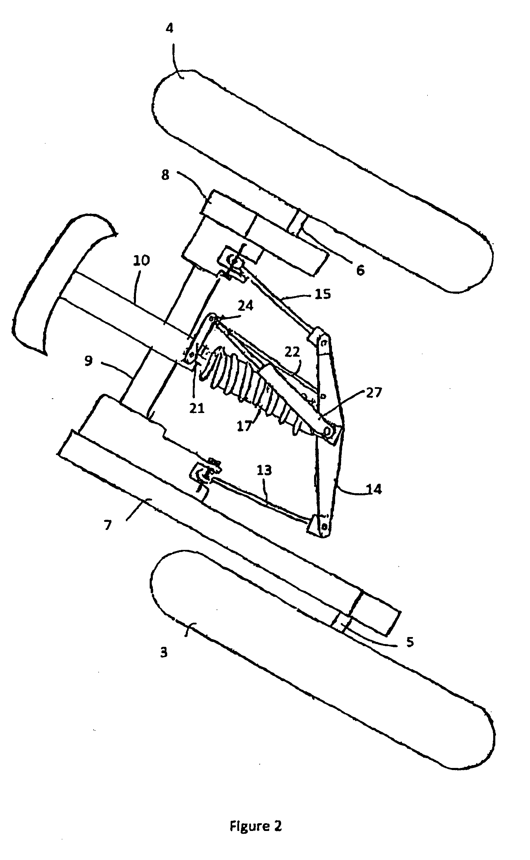

Sur la figure 2, le même train roulant est incliné sur la droite. On s'aperçoit que le vérin 27 est allongé d'une valeur modérée, ce qui est favorable pour le découplage.

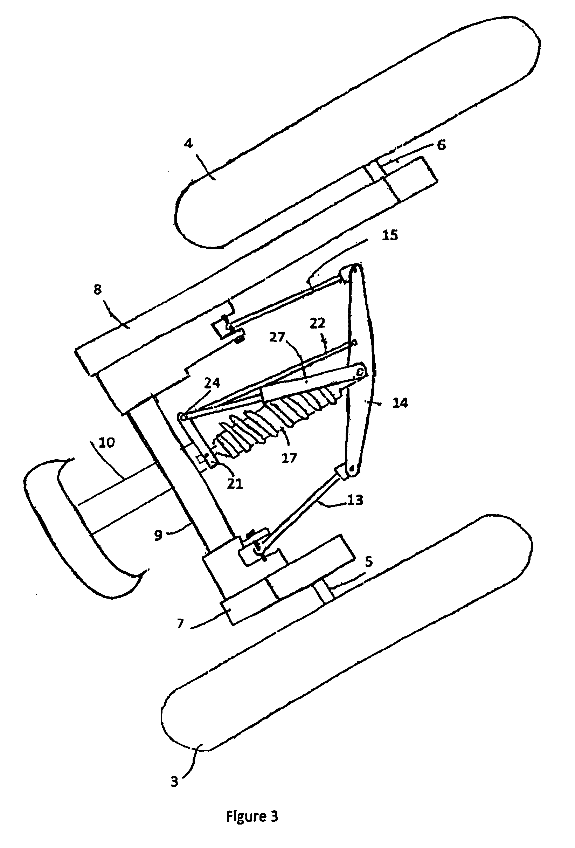

Sur la figure 3, le même train roulant est incliné sur la gauche. Ici, le vérin 27 est raccourci, là encore d'une valeur modérée.

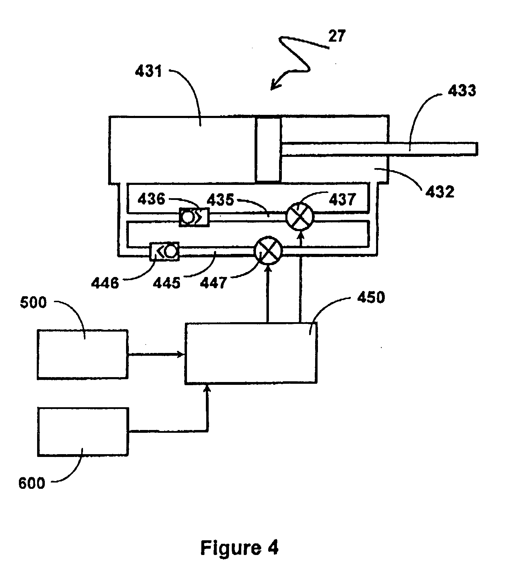

En référence à la figure 4, un mode de réalisation préférentiel de l'organe de blocage 27 est présenté. Il s'agit d'un vérin à double effet dont la première chambre 431 est disposée du côté du balancier 14 et dont la deuxième chambre 432 ainsi que l'axe 433 sont du côté du cadre 10.

Une première canalisation 435 permet au fluide de s'écouler uniquement de la première 431 vers la seconde 432 chambre. De même, une deuxième canalisation 445 permet au fluide de s'écouler uniquement de la seconde 432 vers la première 431 chambre.

La première 435, respectivement la seconde 445 canalisation, comporte un premier 436, respectivement un second 446, clapet anti-retour pour assurer un sens unique de déplacement du fluide. Par ailleurs, la première 435, respectivement la seconde 445 canalisation comporte une première 437, respectivement une seconde vanne 447.

Un circuit de commande 450 tel qu'un microcontrôleur commande les vannes en réponse au signal de sortie de l'accéléromètre qui mesure donc l'accélération transverse du cadre dans la direction perpendiculaire à son plan.

Lorsque le cadre est à l'équilibre dynamique, c'est-à-dire lorsque l'accélération transverse est nulle, le microcontrôleur 450 commande l'ouverture des vannes.

Lorsque le module de l'accélération transverse excède un seuil prédéterminé, deux cas peuvent se présenter.

Si cette accélération est positive, c'est-à-dire si le cadre est trop incliné par rapport à la position d'équilibre, le circuit de commande 450 ferme la deuxième vanne 447 et laisse la première vanne 437 ouverte, ceci dans le cas d'un virage à gauche. Ainsi le vérin ne peut plus s'allonger, mais il a la faculté de se rétracter. Naturellement, dans le cas d'un virage à droite, la commande des deux vannes 437, 447 est inversée.

Si par contre le cadre 10 est insuffisamment incliné par rapport à la position d'équilibre, le circuit de commande 450 ferme la première vanne 437 et laisse la seconde 447 ouverte. Ainsi, le vérin peut s'allonger mais il ne peut pas se rétracter.

Pour obtenir un fonctionnement fluide du moyen de blocage et éviter un freinage trop brutal du cadre, les deux vannes 437, 447 ne fonctionnent pas en tout-ou-rien mais présentent plutôt une ouverture variable. Le circuit de commande 450 détermine l'ouverture de ces vannes en fonction du module de l'accélération transverse. A titre d'exemple, cette fonction est linéaire, l'obturation totale de la vanne étant commandée pour une accélération égale ou supérieure à une valeur fixée.

Il convient de remarquer que l'on peut utiliser un accéléromètre deux axes, ces axes tous deux dans un plan perpendiculaire au cadre 10 étant l'un dans le plan du cadre et l'autre perpendiculaire à ce cadre.

L'angle du vecteur accélération dans le repère orthonormé défini par les deux axes du capteur reflète ainsi directement l'écart angulaire par rapport à la position d'équilibre dynamique. Cet écart angulaire peut servir de référence au circuit de commande 450 à la place du module de l'accélération transverse car il s'agit là d'un moyen équivalent.

Accessoirement, un capteur de vitesse 600 fournit la vitesse longitudinale du dispositif au circuit de commande 450. Celui-ci inhibe le moyen de blocage lorsque cette vitesse est nulle ou très basse, c'est-à-dire qu'il laisse les deux vannes 437, 447 complètement ouvertes. On évite ainsi de contrarier les mouvements erratiques du cadre, notamment au démarrage du véhicule.

Il est également possible de prévoir un verrouillage de l'inclinaison du cadre, par exemple pour une utilisation en terrain accidenté. A cet effet une information est adressée au circuit de commande 450 de sorte qu'il commande l'obturation totale des deux vannes 437, 447.

Il est également préférable de prévoir un organe de filtrage au sein du circuit de commande 450 pour éviter une commande intempestive des vannes 437, 447 suite à l'apparition d'une accélération transverse erratique. On minimise ainsi l'effet des vibrations ou des aspérités de la chaussée. Cet organe, un filtre passe-bas par exemple, est disposé à la sortie de l'accéléromètre 500. On filtre également les régimes transitoires qui se présentent notamment à vitesse réduite ou en entrée et en sortie de courbe ; on stabilise le fonctionnement en évitant des oscillations de l'asservissement.

Le moyen de blocage exposé ci-dessus a pour avantage de présenter une consommation d'énergie extrêmement réduite car les seuls éléments actifs sont les vannes 437, 447.

Toujours dans le domaine de l'hydraulique, on peut envisager l'emploi d'un vérin magnéto-rhéologique. Le fluide circulant dans un tel vérin est chargé de particules ferromagnétiques si bien que sa viscosité est fonction du champ magnétique auquel il est soumis. On peut donc faire varier la résistance à l'écoulement du fluide en utilisant un électroaimant.

L'invention s'applique cependant à tout autre mode de réalisation du moyen de blocage pourvu que sa fonction soit de contrôler l'inclinaison d'un cadre 10.

Indépendamment du moyen de blocage, il peut être judicieux de limiter l'inclinaison du cadre 10 au moyen de butées mécaniques (non représentées) dans une plage qui s'étend typiquement de - 30° à + 30°.

## Revendications

1. Dispositif monté sur un train roulant qui comporte :
- un balancier (14) relié d'une part à un cadre inclinable (10) au moyen d'un amortisseur (17) et d'autre part à deux bras oscillants (7,8) par l'intermédiaire de deux bielles (13, 15),
- un moyen de blocage (27) dont un premier point d'ancrage figure sur ledit balancier (14),
**caractérisé en ce qu'**il comprend un moyen de découplage constitué d'un levier horizontal (21) et d'un levier vertical reliés (22) par un point de liaison (24) autour duquel ils sont à même de pivoter, les extrémités libres de ces leviers étant respectivement reliées audit cadre et audit balancier, le second point d'ancrage dudit moyen de blocage (27) figurant sur ledit moyen de découplage.

2. Dispositif selon la revendication 1, **caractérisé en ce que** ledit second point d'ancrage coïncide avec ledit point de liaison (24).

3. Dispositif selon l'une quelconque des revendications 1 ou 2 **caractérisé en ce que**, ledit amortisseur (17) ayant sa première extrémité liée audit cadre (10) et sa seconde extrémité liée audit balancier (14), ledit levier horizontal (21) est raccordé audit cadre au niveau de ladite première extrémité.

4. Dispositif selon la revendication 3, **caractérisé en ce que** ledit premier point d'ancrage est positionné au niveau de ladite seconde extrémité dudit amortisseur (17).

5. Dispositif selon l'une quelconque des revendications précédentes, **caractérisé en ce que** ledit moyen de blocage (27) est un vérin à double effet.

6. Dispositif selon la revendication 5, **caractérisé en ce que** les deux chambres (431, 432) dudit vérin à double effet (27) sont reliées par deux canalisations unidirectionnelles (435, 445) de sens opposés comportant chacune une vanne (437, 447).

7. Dispositif selon la revendication 6, **caractérisé en ce que** lesdites canalisations unidirectionnelles (435, 445) comportent chacune un clapet anti-retour (436, 446).

8. Dispositif selon l'une quelconque des revendications 5 à 8, **caractérisé en ce qu'**il est agencé pour, lorsque ladite accélération transverse excède un seuil prédéterminé, fermer celle desdites vannes (437, 447) qui autorise un déplacement dudit vérin (27) dans le sens de cette accélération.

9. Dispositif selon la revendication 8, **caractérisé en ce qu'**il est agencé pour déterminer l'ouverture de ladite vanne (437, 447) en fonction du module de ladite accélération transverse.

10. Dispositif selon la revendication 9 **caractérisé en ce que**, disposant de plus de la vitesse longitudinale (600) de ce dispositif, il est agencé pour déterminer l'ouverture de ladite vanne (437, 447) en fonction du module de ladite vitesse longitudinale.

11. Véhicule équipé d'un dispositif conforme à l'une quelconque des revendications précédentes.

12. Véhicule selon la revendication 11, caractérisé en que c'est un quadricycle.

## Patentansprüche

1. Auf ein Fahrwerk montierte Vorrichtung, die aufweist:
- eine Schwinge (14), die einerseits mittels eines Dämpfers (17) mit einem neigbaren Rahmen (10) und andererseits mittels zweier Schubstangen (13, 15) mit zwei Schwenkarmen (7, 8) verbunden ist,
- eine Blockiereinrichtung (27), von der ein erster Verankerungspunkt sich auf der Schwinge (14) befindet,
**dadurch gekennzeichnet, dass** sie eine Abkopplungseinrichtung enthält, die aus einem waagrechten Hebel (21) und einem senkrechten Hebel (22) besteht, die durch einen Verbindungspunkt (24) verbunden sind, um den sie schwenken können, wobei die freien Enden dieser Hebel mit dem Rahmen bzw. mit der Schwinge verbunden sind, wobei der zweite Verankerungspunkt der Blockiereinrichtung (27) sich auf der Abkopplungseinrichtung befindet.

2. Vorrichtung nach Anspruch 1, **dadurch gekennzeichnet, dass** der zweite Verankerungspunkt mit dem Verbindungspunkt (24) zusammenfällt.

3. Vorrichtung nach einem der Ansprüche 1 oder 2, **dadurch gekennzeichnet, dass**, da das erste Ende des Dämpfers (17) mit dem Rahmen (10) und sein zweites Ende mit der Schwinge (14) verbunden ist, der waagrechte Hebel (21) im Bereich des ersten Endes mit dem Rahmen verbunden ist.

4. Vorrichtung nach Anspruch 3, **dadurch gekennzeichnet, dass** der erste Verankerungspunkt im Bereich des zweiten Endes des Dämpfers (17) positioniert ist.

5. Vorrichtung nach einem der vorhergehenden Ansprüche, **dadurch gekennzeichnet, dass** die Blockiereinrichtung (27) ein doppeltwirkender Zylinder ist.

6. Vorrichtung nach Anspruch 5, **dadurch gekennzeichnet, dass** die zwei Kammern (431, 432) des doppeltwirkenden Zylinders (27) durch zwei Einwegleitungen (435, 445) entgegengesetzter Richtungen verbunden sind, die je ein Ventil (437, 447) aufweisen.

7. Vorrichtung nach Anspruch 6, **dadurch gekennzeichnet, dass** die Einwegleitungen (435, 445) je ein Rückschlagventil (436, 446) aufweisen.

8. Vorrichtung nach einem der Ansprüche 5 bis 7, **dadurch gekennzeichnet, dass** sie eingerichtet ist, um, wenn die Querbeschleunigung eine vorbestimmte Schwelle überschreitet, dasjenige der Ventile (437, 447) zu schließen, das eine Verschiebung des Zylinders (27) in Richtung dieser Beschleunigung erlaubt.

9. Vorrichtung nach Anspruch 8, **dadurch gekennzeichnet, dass** sie eingerichtet ist, um die Öffnung des Ventils (437, 447) abhängig vom Modul der Querbeschleunigung zu bestimmten.

10. Vorrichtung nach Anspruch 9, **dadurch gekennzeichnet, dass** sie, wenn man außerdem über die Längsgeschwindigkeit (600) dieser Vorrichtung verfügt, eingerichtet ist, um die Öffnung des Ventils (437, 447) abhängig vom Modul der Längsgeschwindigkeit zu bestimmten.

11. Fahrzeug, das mit einer Vorrichtung nach einem der vorhergehenden Ansprüche ausgestattet ist.

12. Fahrzeug nach Anspruch 11, **dadurch gekennzeichnet, dass** es ein Vierradfahrzeug ist.

## Claims

1. A device mounted on a wheel set that comprises:
- a rocker beam (14) connected firstly to a tiltable frame (10) by means of a shock absorbed (17) and secondly to two oscillating arms (7, 8) via two connecting rods (13, 15); and
- blocking means (27) having a first anchor point on said rocker beam (14);
the device being **characterized in that** it includes decoupling means constituted by a horizontal lever (21) and a vertical lever (22) that are connected together by a connection point (24) about which they are capable of pivoting, the free ends of said levers being connected respectively to said frame and to said rocker beam, the second anchor point of said blocking means (27) being on said decoupling means.

2. A device according to claim 1, **characterized in that** the second anchor point coincides with said connection point (24).

3. A device according to claim 1 or claim 2, **characterized in that** said shock absorber (17) has its first end connected to said frame (10) and its second end connected to said rocker beam (14), and said horizontal lever (21) is connected to said frame at said first end.

4. A device according to claim 3, **characterized in that** said first anchor point is positioned at said second end of said shock absorber (17).

5. A device according to any preceding claim, **characterized in that** said blocking means (27) comprise a double-acting actuator.

6. A device according to claim 5, **characterized in that** the two chambers (431, 432) of said double-aching actuator (27) are connected together by two opposite-direction one-way pipes (435, 445) each including a respective valve (437, 447).

7. A device according to claim 6, **characterized in that** each of said one-way pipes (435, 445) includes a check valve (436, 446).

8. A device according to any one of claims 5 to 8, **characterized in that** it is arranged, when said transverse acceleration exceeds a predetermined threshold, to close that one of said valves (437, 447) that allows said actuator (27) to move in the direction of said acceleration.

9. A device according to claim 8, **characterized in that** it is arranged to determine the through section of said valve (437, 447) as a function of the modulus of said transverse acceleration.

10. A device according to claim 9, **characterized in that** when the longitudinal speed (600) of the device is also available, the device is arranged to determine the flow section of said valve (437, 447) as a function of the modules of said longitudinal speed.

11. A vehicle fitted with a device according to any one of the preceding claims.

12. A vehicle according to claim 11, **characterized in that** it is a quadricycle.
